# EUROPÄISCHE PATENTSCHRIFT

(11) **EP 3 259 799 B1**
(45) Veröffentlichungstag und Bekanntmachung des Hinweises auf die Patenterteilung: **08.04.2020**
(21) Anmeldenummer: 16705115.0
(22) Anmeldetag: 16.02.2016
(51) Int. Cl.: H01M 10/48, B60L 3/12, B60L 3/00, H01M 10/44, H01M 10/42, H01M 12/00, H02J 7/04, H02J 7/00, H01M 10/46, H01M 2/20, B60L 50/64, B60L 58/12, B60L 58/14, B60L 58/16, B60L 58/18, B60L 58/22

(54) **BATTERIE MIT ZUMINDEST ZWEI BATTERIEZELLEN SOWIE KRAFTFAHRZEUG**
BATTERY HAVING AT LEAST TWO BATTERY CELLS, AND MOTOR VEHICLE
BATTERIE COMPRENANT AU MOINS DEUX ÉLÉMENTS DE BATTERIE ET VÉHICULE AUTOMOBILE

(30) Priorität: 18.02.2015 DE 102015002154
(43) Veröffentlichungstag der Anmeldung: 27.12.2017
(73) Patentinhaber: Audi AG, 85045 Ingolstadt (DE)
(72) Erfinder: HINTERBERGER, Michael, 85055 Ingolstadt (DE); HELLENTHAL, Berthold, 90596 Schwanstetten (DE); ALLMANN, Christian, 85051 Ingolstadt (DE)
(86) Internationale Anmeldenummer: PCT/EP2016/053261
(87) Internationale Veröffentlichungsnummer: WO 2016/131823

(56) Entgegenhaltungen:
- WO-A1-2004/047215
- WO-A1-2011/135868
- WO-A1-2012/034045
- DE-A1-102010 011 740
- DE-A1-102011 088 440
- DE-A1-102012 202 751
- DE-A1-102012 214 961
- US-A1- 2010 019 732
- US-A1- 2011 048 485

## Beschreibung

Die Erfindung betrifft eine Batterie mit zumindest zwei Batteriezellen, welche mittels zumindest eines elektrischen Verbindungselementes miteinander verschaltet sind, und einer übergeordneten Steuereinrichtung, wobei jede der Batteriezellen zumindest ein galvanisches Element, ein Batteriezellengehäuse zum Aufnehmen des galvanischen Elementes, zumindest eine Sensoreinrichtung zum Erfassen einer physikalischen und/oder chemischen Eigenschaft der Batteriezelle und eine Kommunikationseinrichtung zum Kommunizieren mit der übergeordneten Steuereinrichtung aufweist. Die Erfindung betrifft außerdem ein Kraftfahrzeug mit einer Batterie.

Es ist bereits aus dem Stand der Technik bekannt, einzelne Batteriezellen zu Batterien beziehungsweise Batteriesystemen elektrisch zu verschalten und mechanisch sicher zu fixieren. Diese Batterien werden heutzutage insbesondere als Traktionsbatterien in Kraftfahrzeugen, beispielsweise in Elektro- oder Hybridfahrzeugen, zum Antreiben der Kraftfahrzeuge eingesetzt. Beim Einsatz der Batterien in Kraftfahrzeugen müssen diese jedoch gewisse Anforderungen erfüllen. Da die Traktionsbatterien einige hundert Volt bereitstellen können, müssen besondere Sicherheitsmaßnahmen getroffen werden, um beispielsweise eine Gefährdung von Personen zu vermeiden. Außerdem muss eine hohe Verfügbarkeit der Batterie gewährleistet werden. Diese Verfügbarkeit ist insbesondere abhängig von einem Schädigungsgrad beziehungsweise einer Alterung der Batterie. Da die Batteriezellen fertigungsbedingt Schwankungen in ihrer Kapazität sowie in ihrem Innenwiderstand aufweisen, werden sie in der Regel unterschiedlich schnell geladen und entladen. Dabei kann es zu einer Schädigung der Batterie kommen, wenn einzelne Zellen beispielsweise tiefenentladen oder überladen werden. Eine Schädigung beziehungsweise ein Ausfall einer Batteriezelle kann dabei insbesondere in einer Reihenschaltung der Batteriezellen einen Ausfall der gesamten Batterie zur Folge haben.

Um eine Batterie oder einzelne Batteriezellen zu überwachen, sind aus dem Stand der Technik Maßnahmen bekannt. So zeigt die DE 10 2010 011 740 A1 eine Batterie, bei welcher ein Zustand einzelner Batteriezellen von Sensoren erfasst und drahtlos an eine übergeordnete Zentraleinheit versendet wird. In der WO 2012/034045 A1 ist ein Batterieüberwachungssystem beschrieben, bei welchem eine Messeinrichtung an oder in einer Batteriezelle angebracht wird. Auch die WO 2004/047215 A1 offenbart ein Batteriemanagementsystem, bei welchem zur Verlängerung der Lebensdauer der Batterie physikalische Eigenschaften derselben überwacht werden.

Die DE 10 2012 214 961 A1 offenbart eine Batteriezelle mit einem Batteriezellengehäuse, einem Batteriezellengehäusedeckel, zwei Batteriezellenterminals, über welche die Batteriezelle mit einem Batteriesystem verbindbar ist, eine positive Elektrode und eine negative Elektrode, welche innerhalb des Batteriezellengehäuses angeordnet und über jeweils einen Strompfad innerhalb des Batteriezellen Gehäuses mit jeweils einem Batteriezellenterminal verbunden sind, und eine elektronische Schaltung. Mindestens einer der Strompfade zwischen der positiven Elektrode oder der negativen Elektrode und jeweils einem Batteriezellenelement weist mindestens ein Schaltmittel auf, welches durch die elektronische Schaltung ansteuerbar ist.

Die DE 10 2011 088 440 A1 offenbart eine Energiespeicherzelle mit einem Energiespeicher und einer Energiespeicherüberwachungseinrichtung, die ausgebildet ist, um eine Eigenschaft des Energiespeichers zu erfassen. Ferner weist die Energiespeicherzelle einen ersten Kommunikationsanschluss auf, der ausgebildet ist, um für eine drahtlose Übertragung der erfassten Eigenschaft mit einem weiteren Kommunikationsanschluss, der extern zu der Energiespeicherzelle ist, gekoppelt zu werden.

Die US 2010/0019732 A1 offenbart ein Batteriesteuerungssystem und ein Batteriesteuerverfahren, das eine Verwaltungsvorrichtung aufweist, die die Spannungen einzelner Zellen in einem Batteriesatz steuert, eliminieren, dem Einfluss von Rauschen widerstehen, eine Vergrößerung verhindern und die Last auf eine Verwaltungsvorrichtung reduzieren kann. Eine Zelle für ein Batteriepack wird mit einer anderen Zelle verbunden, die als Batteriepack verwendet werden soll, die Zelle umfasst die Einheitszelle und die Steuerschaltung, die Einheitszelle ist eine elektrochemische Zelle, und die Steuerschaltung beinhaltet: Messmittel zum Erfassen von Zellzustandsinformationen, die mindestens eine Spannung der Einheitszelle beinhalten; Übertragungsmittel zum Übertragen der Zellzustandsinformationen nach außen; Empfangsmittel zum Empfangen externer Informationen; und Mittel zum Entladen der Einheitszelle basierend auf den Zellzustandsinformationen der Einheitszelle und den externen Informationen, um die Spannungen der miteinander verbundenen Zellen näher zu bringen.

Die WO 2011/135868 A1 offenbart ein Batteriemodul, das eine Vielzahl von ersten Schaltungen und eine Vielzahl von Stromkorrekturschaltungen aufweist, die jeweils einer Vielzahl von Batteriezellgruppen entsprechen, und eine gemeinsame Steuereinheit. Die ersten Schaltungen arbeiten mit Strom, der von den entsprechenden Batteriezellengruppen geliefert wird. Die ersten Stromkreise und das Steuergerät sind so miteinander verbunden, dass die ersten Stromkreise und das Steuergerät miteinander kommunizieren können. Die Erfassungseinheiten der ersten Schaltungen erfassen jeweils Verbrauchsströme in den entsprechenden ersten Schaltungen. Die Steuereinheit steuert die Stromkorrekturschaltungen so, dass die Werte der von den Erfassungseinheiten der ersten Schaltungen erfassten Verbrauchsströme gleich sind.

Die WO 2004/047215 A1 offenbart ein System, eine Zelleneinheit, eine Steuereinheit und ein Verfahren zur automatisierten Verwaltung von Batterien über eine drahtlose Kommunikationsverbindung. Der Lebenszyklus kann einzelner Zellen einer Batterie von einem externen Steuergerät verfolgt und aufgezeichnet werden.

Es ist Aufgabe der vorliegenden Erfindung, eine besonders zuverlässige Batterie mit einer hohen Lebensdauer und ein Kraftfahrzeug mit einer solchen Batterie zu schaffen.

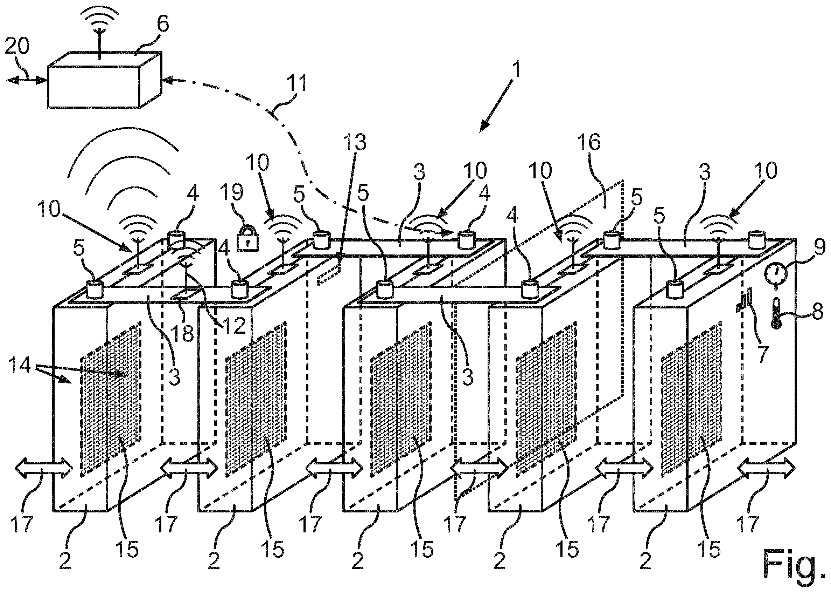

Diese Aufgabe wird erfindungsgemäß durch eine Batterie sowie ein Kraftfahrzeug mit den Merkmalen gemäß den unabhängigen Patentansprüchen gelöst. Vorteilhafte Ausführungen der Erfindung sind Gegenstand der abhängigen Patentansprüche, der Beschreibung und der Figur.

Die erfindungsgemäße Batterie weist zumindest zwei Batteriezellen und eine übergeordnete Steuereinrichtung auf. Die zumindest zwei Batteriezellen sind mittels zumindest eines elektrischen Verbindungselementes miteinander verschaltet. Jede der Batteriezellen umfasst zumindest ein galvanisches Element, ein Batteriezellengehäuse zum Aufnehmen des galvanischen Elementes, zumindest eine Sensoreinrichtung zum Erfassen einer physikalischen und/oder chemischen Eigenschaft der Batteriezelle und eine Kommunikationseinrichtung zum Kommunizieren mit der übergeordneten Steuereinrichtung. Darüber hinaus ist die übergeordnete Steuereinrichtung dazu ausgelegt, in Abhängigkeit von den physikalischen und/oder chemischen Eigenschaften der Batteriezellen einen Energiefluss in zumindest eine der Batteriezellen und/oder aus zumindest einer der Batteriezellen zu steuern.

Das galvanische Element jeder der Batteriezellen ist insbesondere als eine Sekundärzelle ausgestaltet, welche zum Versorgen einer elektrischen Komponente entladbar und nach der Entladung wieder aufladbar ist. Das galvanische Element umfasst dabei in an sich bekannter Weise zwei Elektroden und einen Elektrolyt. Das galvanische Element ist in dem Batteriezellengehäuse angeordnet, welches beispielsweise aus Aluminium gefertigt ist. Das galvanische Element kann gegenüber dem Batteriezellengehäuse elektrisch isoliert sein. Dazu kann beispielsweise ein isolierendes Material zwischen einer Innenseite einer Wand der Batteriezellengehäuses und dem galvanischen Element angeordnet sein. Das Batteriezellengehäuse weist zwei Anschlüsse auf, wobei jeweils eine Elektrode des galvanischen Elementes elektrisch mit jeweils einem Anschluss gekoppelt ist.

Zum elektrischen Verschalten der Batteriezellen wird zumindest ein Anschluss einer ersten der Batteriezellen mit einem Anschluss einer zweiten der Batteriezellen mittels des elektrischen Verbindungselementes verbunden. Das elektrische Verbindungselement kann beispielsweise als eine Stromschiene ausgestaltet sein. Dabei können die Batteriezellen elektrisch parallel und/oder elektrisch seriell verschaltet werden. Es kann auch vorgesehen sein, dass einzelne Batteriezellen zu Batteriemodulen verschaltet werden und die Batteriemodule zu der Batterie verschaltet werden.

Die zumindest eine Sensoreinrichtung jeder der Batteriezellen dient zum Erfassen von physikalischen und/oder chemischen Eigenschaften der Batteriezelle. Die zumindest eine Sensoreinrichtung kann beispielsweise als ein Temperatursensor zum Erfassen einer Temperatur innerhalb des Batteriezellengehäuses und/oder als ein Drucksensor zum Erfassen eines Druckes innerhalb des Batteriezellengehäuses und/oder als ein chemischer Sensor zum Erfassen einer chemischen Zusammensetzung des Elektrolyten ausgestaltet sein.

Die Kommunikationseinrichtung jeder der Batteriezellen kann beispielsweise als eine Drahtlosübertragungseinrichtung, beispielsweise eine Funkantenne ausgestaltet sein, welche Daten an die übergeordnete Steuereinrichtung und/oder an die Kommunikationseinrichtung einer anderen Batteriezelle der Batterie versendet und/oder von der übergeordneten Steuereinrichtung und/oder der Kommunikationseinrichtung einer anderen Batteriezelle empfängt. Solche Daten können beispielsweise die von der zumindest einen Sensoreinrichtung der jeweiligen Batteriezelle erfassten Eigenschaften umfassen. Die Daten können beispielsweise über Bluetooth oder WLAN, aber auch über Ultraschall oder Lichtpulse versendet und/oder empfangen werden.

Um die drahtlose Datenübertragung besonders sicher zu gestalten, kann als eine sichere Funkverbindung eine verschlüsselte, elektromagnetisch verträgliche Drahtlosverbindung für einen bidirektionalen Datenaustausch, beispielsweise zwischen den Batteriezellen und der übergeordneten Steuereinrichtung, bereitgestellt werden. Mittels einer Drahtlosübertragung können die Daten besonders schnell und flexibel übertragen werden.

Es kann aber auch vorgesehen sein, dass die Daten mittels Datenmodulation leitungsgebunden, beispielsweise über Ethernet, übertragen werden. Dazu kann die Leitung beispielsweise mit den Batteriezellenanschlüssen und der übergeordneten Steuereinrichtung verbunden sein. Mittels der leitungsgebundenen Übertragung kann in vorteilhafter Weise ein zuverlässiger und störungsfreier verschlüsselter Datenaustausch umgesetzt werden.

Eine mit zumindest einer Sensoreinrichtung und einer Kommunikationseinrichtung versehene Batteriezelle kann auch als Intelligente Batteriezelle beziehungsweise Smart Cell bezeichnet werden.

Die zumindest eine Sensoreinrichtung und die Kommunikationseinrichtung der jeweiligen Batteriezelle können dabei bevorzugt in einem Halbleiterchip integriert werden. Dieser hoch integrierte intelligente Halbleiterchip wird auch als Ein-Chip-System beziehungsweise System-on-a-Chip (SoP) bezeichnet. Durch diese Miniaturisierung können die zumindest eine Sensoreinrichtung und die Kommunikationseinrichtung besonders platzsparend innerhalb oder außerhalb des Batteriezellengehäuses der jeweiligen Batterie angeordnet werden. So kann der Halbleiterchip beispielsweise in einem Hohlraum innerhalb des Batteriezellengehäuses, welcher sich beispielsweise zwischen einer Innenseite der Wand des Batteriezellengehäuses und dem galvanischen Element befindet, angeordnet werden. Dabei kann der Halbleiterchip thermisch mit dem Batteriezellengehäuse gekoppelt werden, sodass Wärme, welche im Betrieb des Halbleiterchips entsteht, an das Batteriezellengehäuse und weiter an die Umgebung abgeführt werden kann. Außerhalb des Batteriezellengehäuses kann der Halbleiterchip besonders platzsparend zwischen den, insbesondere erhabenen beziehungsweise exponierten, Anschlüssen des Batteriezellengehäuses angeordnet werden.

Der Halbleiterchip kann zusätzlich mit einer Sicherheitsfunktion beziehungsweise einer Security-Funktion ausgestattet sein. So kann beispielsweise sichergestellt werden kann, dass es sich bei der Batteriezelle um einen von einem sogenannten Erstausrüster (OEM - Original Equipment Manufacturer) bereitgestellten Energiespeicher handelt. Außerdem können individuelle Identifikationsnummern, sogenannte IDs, und weitere Informationen für jede Batteriezelle elektronisch hinterlegt werden. Darüber hinaus kann der Halbleiterchip mit der Sicherheitsfunktion dazu verwendet werde, einen Missbrauch oder eine vorsätzliche Zerstörung der Batteriezelle zu detektieren. Wenn der Halbleiterchip nämlich innerhalb des Batteriezellengehäuses angeordnet ist, müsste die Batteriezelle zerstört werden, um den Halbleiterchip zu entfernen. Dies kann von dem Halbleiterchip erkannt werden. Daraufhin kann der Halbleiterchip beispielsweise nicht-reversibel deaktiviert werden.

Die übergeordnete Steuereinrichtung kann als ein Smart Cell Controller ausgestaltet sein. Dabei ist die übergeordnete Steuereinrichtung dazu ausgelegt, beispielsweise 12-Bit Adressen per drahtloser Kommunikation über eine Distanz von beispielsweise fünf Metern und mehr anzusprechen und Datensätze auszutauschen. Die übergeordnete Steuereinrichtung kann auch einen Speicher aufweisen, in welchem die Daten hinterlegt werden können. Auch kann die übergeordnete Steuereinrichtung mit einem Batteriemanagementsystem kommunizieren.

Die Steuereinrichtung ist nun dazu ausgelegt, den Energiefluss aus zumindest einer der Batteriezellen, also ein Entladen zumindest einer der Batteriezellen, und/oder den Energiefluss in zumindest eine der Batteriezellen, also ein Laden zumindest einer der Batteriezellen, in Abhängigkeit von den erfassten physikalischen und/oder chemischen Eigenschaften der Batteriezellen zu steuern. Dabei kann es vorgesehen sein, dass zum Steuern des Energieflusses in oder aus einer der Batteriezellen nur die physikalischen und/oder chemischen Eigenschaften dieser einen Batteriezelle oder auch die physikalischen und/oder chemischen Eigenschaften der anderen Batteriezellen der Batterie berücksichtigt werden.

Durch das individuelle Steuern der Energieflüsse jeder der Batteriezellen, welche in der Regel fertigungsbedingt Schwankungen in ihrer Kapazität sowie in ihrem Innenwiderstand aufweisen, kann insbesondere ein Tiefenentladen oder Überladen der Batteriezellen und damit eine Schädigung der gesamten Batterie vermieden werden. Somit kann eine Lebensdauer und damit eine Verfügbarkeit der Batterie deutlich verlängert werden.

Es ist vorgesehen, dass das elektrische Verbindungselement zumindest eine Sensoreinrichtung zum Erfassen einer Zustandsgröße des elektrischen Verbindungselementes und eine Kommunikationseinrichtung zum Kommunizieren mit der übergeordneten Steuereinrichtung aufweist, und die übergeordnete Steuereinrichtung dazu ausgelegt ist, den Energiefluss in Abhängigkeit von der erfassten Zustandsgröße zu steuern. Eine solche Zustandsgröße kann ein Strom über das elektrische Verbindungselement und/oder eine Temperatur und/oder ein elektrisches Potential und/oder eine mechanische Dehnung und/oder eine mechanische Biegung sein. Mittels der Sensoreinrichtung, welche insbesondere in das etwa als Stromschiene ausgestaltete elektrische Verbindungselement integriert ist, können somit in vorteilhafter Weise auch Interaktionen zwischen den einzelnen Batteriezellen erfasst werden.

Es ist vorgesehen, dass die Sensoreinrichtungen jeder der Batteriezellen dazu ausgelegt sind, einen Ladezustand der jeweiligen Batteriezelle zu erfassen. Die übergeordnete Steuereinrichtung ist dazu ausgelegt, die Ladezustände der Batteriezellen miteinander zu vergleichen und bei Überschreitung einer vorgegebenen Abweichung der Ladezustände den Energiefluss in zumindest eine der Batteriezellen und/oder aus zumindest einer der Batteriezellen zum Angleichen der Ladezustände zu steuern. Durch die Erfassung der Ladezustände beziehungsweise der Kapazitäten und den Vergleich der einzelnen Ladezustände beziehungsweise der Kapazitäten der Batteriezellen untereinander kann ein Ladezustandsausgleich, ein sogenanntes Balancing, durchgeführt werden. Die Ladezustände können beispielsweise durch Erfassen der Batteriezellspannungen ermittelt werden. Beim Ladezustandsausgleich wird ein Energiefluss zumindest einer der Batteriezellen solange gesteuert, bis alle Batteriezellen - unter Berücksichtigung der üblichen Toleranzen - den gleichen Ladezustand aufweisen. Durch das Balancing ergibt sich der Vorteil, dass die Lebensdauer der Batteriezellen und damit der gesamten Batterie erhöht wird.

Es ist vorgesehen, dass die zumindest zwei Batteriezellen mittels des elektrischen Verbindungselementes seriell verschaltet sind und zumindest eine Seitenwand eines ersten der Batteriezellengehäuse und zumindest eine Seitenwand eines zweiten der Batteriezellengehäuse ein elektrisch leitfähiges Material aufweisen und die übergeordnete Steuereinrichtung dazu ausgelegt ist, bei der Überschreitung der vorgegebenen Abweichung eine kapazitive Energieübertragung zwischen den Seitenwänden der Batteriezellengehäuse zum Angleichen der Ladezustände zu steuern.

Hier wird ein sogenanntes aktives Balancing durchgeführt. Dabei wird in vorteilhafter Weise Energie einer höher geladenen Batteriezelle an eine niedriger geladene Batteriezelle abgegeben. Es wird also die höher geladene Batteriezelle entladen und die niedriger geladene Batteriezelle mit der Energie der höher geladenen Batteriezelle geladen. Dabei sind die seriell verschalteten Batteriezellen derart zueinander angeordnet, dass mittels der elektrisch leitfähigen Seitenwände zweier benachbarter Batteriezellengehäuse ein Plattenkondensator gebildet wird, über welchen kapazitiv Energie durch Erzeugung eines elektrischen Wechselfeldes in dem Plattenkondensator übertragen wird. Dabei bilden die elektrisch leitfähigen Seitenwände die Elektroden des Plattenkondensators. Zwischen den Seitenwänden kann sich eine elektrische Isolierungen befinden, welche das Dielektrikum zwischen den Elektroden des Plattenkondensators ausbildet. Dabei können die Seitenwände entweder mit dem elektrisch leitfähigen Material, beispielsweise einer Folie, beschichtet sein, oder aus dem elektrisch leitfähigen Material, beispielsweise Aluminium, hergestellt sein.

Durch die Serienschaltung beziehungsweise die verkettete Anordnung der Batteriezellen und damit der Plattenkondensatoren kann somit Energie dynamisch von einer Batteriezelle auf eine benachbarte Batteriezelle übertragen werden. Der große Vorteil bei einer kapazitiven Energieübertragung, welcher auf einen Verschiebungsstrom infolge des veränderlichen elektrischen Feldes beruht, ist, dass nahezu keine Verluste, beispielsweise in Form von Wärme, auftreten.

Bevorzugt weist jede der Batteriezellen eine Speichereinrichtung beziehungsweise einen elektronischen Speicher zum Speichern der physikalischen und/oder chemischen Eigenschaft der Batteriezelle auf. Dabei ist die übergeordnete Steuereinrichtung dazu ausgelegt, in Abhängigkeit von den gespeicherten physikalischen und/oder chemischen Eigenschaften der Batteriezellen den Energiefluss zu steuern. Diese Speichereinrichtung kann in vorteilhafter Weise gemeinsam mit der zumindest einen Sensoreinrichtung und der Kommunikationseinrichtung in den Halbleiterchip integriert sein. Dabei kann die Speichereinrichtung mit der zumindest einen Sensoreinrichtung kommunizieren, sodass die erfassten Daten der zumindest einen Sensoreinrichtung an die Speichereinrichtung übertragen werden können. Somit kann eine Historie der Batteriezelle mit den physikalischen und/oder chemischen Eigenschaften der Batteriezelle über die Lebenszeit der Batteriezelle angelegt werden. Solche Eigenschaften können beispielsweise ein Ladezustand (SoC - State of Charge), ein Gesundheitszustand (SoH - State of Health), Maximalstromwerte, sogenannte Strom-Peaks, oder Stromverläufe der jeweiligen Batteriezelle umfassen. Somit kann eine Batteriezelle über die gesamte Lebenszeit überwacht werden und somit in vorteilhafter Weise ein Energiefluss auch an die Lebensdauer beziehungsweise eine Alterung der jeweiligen Batteriezelle angepasst werden.

Bevorzugt weist jede der Batteriezellen zumindest eine Schalteinrichtung auf, mittels welcher eine Elektrode des galvanischen Elementes und ein Anschluss der jeweiligen Batteriezelle elektrisch gekoppelt sind und mittels welcher ein Stromfluss zwischen dem galvanischen Element und dem Anschluss der jeweiligen Batteriezelle steuerbar ist. Außerdem ist die übergeordnete Steuereinrichtung dazu ausgelegt, als den Energiefluss den Stromfluss zwischen der Elektrode und dem Anschluss zumindest einer der Batteriezellen zu steuern. Dabei kann jede der Elektrode mittels des Schaltelementes mit dem jeweiligen Anschluss gekoppelt sein oder nur eine der beiden Elektrode mittels der Schalteinrichtung mit dem jeweiligen Anschluss gekoppelt sein.

Die Schalteinrichtung ist bevorzugt als elektronisches Schaltelement beziehungsweise ein Halbleiterschalter ausgestaltet, bei welchem ein Stromfluss über das elektronische Schaltelement mittels einer Steuerspannung an dem elektronischen Schaltelement steuerbar ist. Anders ausgedrückt bedeutet dies, dass ein elektrischer Widerstand zwischen der Elektrode und dem Anschluss durch Vorgeben einer entsprechenden Steuerspannung verändert werden kann. Dabei ist die übergeordnete Steuereinrichtung dazu ausgelegt, das elektronische Schaltelement anzusteuern, also beispielsweise die entsprechende Steuerspannung vorzugeben.

Das Schaltelement, welches beispielsweise als ein Leistungs-MOSFET (Metall-Oxid-Halbleiter-Feldeffekttransistor) oder als ein IGBT (insulated gate bipolar transistor) ausgestaltet sein kann, kann abhängig von der Steuerspannung in verschiedenen Bereichen betrieben werden. Wenn das elektronische Schaltelement in einem Sperrbereich betrieben wird, also wenn die Steuerspannung einen vorgegebenen Schwellwert unterschreitet, sperrt beziehungsweise blockiert das elektronische Schaltelement einen Stromfluss zwischen der Elektrode und dem jeweiligen Anschluss. Wenn das elektronische Schaltelement in einem linearen Bereich beziehungsweise einem Triodenbereich betrieben wird, so kann durch Erhöhen der Steuerspannung der Stromfluss linear erhöht werden. Wenn das elektronische Schaltelement in einem Sättigungsbereich betrieben wird, so kann zwischen dem Anschluss und der Elektrode ab einer bestimmten Steuerspannung ein konstanter, maximaler Strom fließen. Die Steuereinrichtung ist nun dazu ausgelegt, die Steuerspannung in Abhängigkeit der physikalischen und/oder chemischen Eigenschaft der Batteriezelle für das elektronische Schaltelement vorzugeben.

Wenn beispielsweise von der Sensoreinrichtung einer der Batteriezellen ein erhöhter Innendruck oder eine erhöhte Temperatur in dem Batteriezellengehäuse erfasst wurde, welche beispielsweise auf einen Defekt der Batteriezelle hindeuten, so kann die übergeordnete Steuereinrichtung die Schalteinrichtung dieser Batteriezelle in dem Sperrbereich betreiben und damit einen Stromfluss zwischen den Elektroden und den Anschlüssen dieser Batteriezelle in vorteilhafter Weise sperren.

Gemäß einer Ausführungsform der Erfindung weist jede der Batteriezellen jeweils eine Auswerteeinrichtung auf, welche dazu ausgelegt ist, in Abhängigkeit von der erfassten physikalischen und/oder chemischen Eigenschaft einen Schädigungsgrad der jeweiligen Batteriezelle zu ermitteln. Die übergeordnete Steuereinrichtung und/oder die Auswerteeinrichtung ist dazu ausgelegt, den Stromfluss zwischen der Elektrode und dem Anschluss der jeweiligen Batteriezelle in Abhängigkeit von dem Schädigungsgrad der jeweiligen Batteriezelle zu steuern. Die Auswerteeinrichtung kann beispielsweise als ein Mirkocontroller ausgeführt sein und ebenfalls in den Halbleiterchip integriert sein. Somit können Sensordaten sofort innerhalb der Batteriezelle ausgewertet werden und beispielsweise nur dann an die übergeordnete Steuereinrichtung übertragen werden, wenn die ausgewerteten Sensordaten außerhalb eines vorbestimmten Toleranzbereiches liegen.

Die Auswerteeinrichtung ist also bevorzugt dazu ausgelegt, in Abhängigkeit der physikalischen und/oder chemischen Eigenschaften den Schädigungsgrad beziehungsweise eine Alterung der jeweiligen Batteriezelle zu ermitteln. Dieser Schädigungsgrad wird der übergeordneten Steuereinrichtung über die Kommunikationseinrichtung kommuniziert, welche daraufhin den Stromfluss durch Ansteuern des Schaltelementes insbesondere begrenzt. Auch kann es vorgesehen sein, dass die Auswerteeinrichtung selbst den Stromfluss durch Ansteuern der Schalteinrichtung begrenzt. Somit kann ein die Lebensdauer verlängernder, schonender Betrieb für die jeweilige Batteriezelle bereitgestellt werden.

In einer Ausgestaltung der Erfindung weist jede der Batteriezellen ein insbesondere thermisch mit dem jeweiligen Batteriezellengehäuse gekoppeltes Widerstandselement auf. Die übergeordnete Steuereinrichtung ist dazu ausgelegt, bei der Überschreitung der vorgegebenen Abweichung das Widerstandselement zumindest einer der Batteriezellen zum Angleichen der Ladezustände mit den Elektroden des galvanischen Elementes der jeweiligen Batteriezelle elektrisch zu verbinden. Hier wird ein sogenanntes passives beziehungsweise dissipatives Balancing durchgeführt, bei welchem diejenige Batteriezelle oder diejenigen Batteriezellen, die einen im Vergleich zu anderen Batteriezellen höheren Ladezustand aufweist oder aufweisen, gezielt über das Widerstandselement entladen werden. Die Energie der jeweiligen Batteriezelle wird dabei über das Widerstandselement in Wärme umgewandelt. Anders ausgedrückt werden die Batteriezellen auf dasselbe Spannungsniveau beziehungsweise den selben Ladezustand balanciert.

Dazu ist die übergeordnete Steuereinrichtung dazu ausgelegt, das Widerstandselement derjenigen Batteriezelle beziehungsweise derjenigen Batteriezellen, welche den im Vergleich zu den anderen Batteriezellen erhöhten Ladezustand aufweist beziehungsweise aufweisen, an die Elektroden des galvanischen Elementes anzuschließen. Dazu kann das Widerstandelement beispielsweise über zumindest ein Schaltelement mit den Elektroden des galvanischen Elementes elektrisch verbindbar sein, wobei die Steuereinrichtung dazu ausgelegt ist, das Schaltelement zum Balancieren zu schließen.

Das Widerstandselement ist dabei insbesondere innerhalb des Batteriezellengehäuses, und damit besonders platzsparend, angeordnet und mit dem Batteriezellengehäuse thermisch gekoppelt. Da das Widerstandselement die Energie des galvanischen Elementes zum Entladen der Batteriezelle in Wärme umwandelt, kann diese Wärme in vorteilhafter Weise an das Batteriezellengehäuse und weiter an die Umgebung der Batteriezelle abgegeben werden. Somit kann verhindert werden, dass sich eine Temperatur innerhalb des Batteriezellengehäuses zu sehr erhöht.

Insgesamt ist durch die Erfindung eine Batterie gezeigt, welche eine Zusammenschaltung aus Batteriezellen beziehungsweise Smart Cells aufweist. Jede der Smart Cells ist mit einer Intelligenz, beispielsweise in Form von Sensoreinrichtungen, Auswerteeinrichtungen und Kommunikationseinrichtungen, ausgestattet, durch welche jederzeit Informationen über die jeweilige Zelle zur Verfügung stehen und somit ein Zustand der Batteriezellen jederzeit bekannt ist. Durch die Integration der Intelligenz in einen Halbleiterchip ist jede der Smart Cells als ein hoch integrierter, kompakter Energiespeicher ausgestaltet. Bevorzugt sind die Sensoreinrichtungen, Auswerteeinrichtungen und Kommunikationseinrichtungen als Ultra-Low-Power-Komponenten ausgeführt, wodurch eine besonders energiesparende Überwachung der Batteriezellen gewährleistet werden kann.

Ein erfindungsgemäßes Kraftfahrzeug umfasst zumindest eine erfindungsgemäße Batterie. Das Kraftfahrzeug kann beispielsweise als Personenkraftwagen, insbesondere als ein Elektro- oder Hybridkraftwagen ausgestaltet sein. Das Kraftfahrzeug kann aber auch als ein elektrisch betriebenes Motorrad oder Fahrrad ausgeführt sein.

Es ist aber auch möglich, die Batterie in einem stationären Energiespeichersystem vorzusehen. Dabei kann es beispielsweise vorgesehen sein, dass die Batterie, welche in einem Kraftfahrzeug bereitgestellt war, als sogenannte Second Life Batterie in dem stationären Energiespeichersystem weiterverwendet wird.

Die mit Bezug auf die erfindungsgemäße Batterie vorgestellten bevorzugten Ausführungsformen und deren Vorteile gelten entsprechend für das erfindungsgemäße Kraftfahrzeug.

Im Folgenden wird die Erfindung nun anhand eines bevorzugten Ausführungsbeispiels, wie auch unter Bezugnahme auf die beigefügte Zeichnung näher erläutert.

Es zeigt die einzige Figur eine schematische Darstellung einer Batterie mit Batteriezellen.

Bei dem im Folgenden erläuterten Ausführungsbeispiel handelt es sich um eine bevorzugte Ausführungsform der Erfindung. Bei dem Ausführungsbeispiel stellen aber die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

Die Figur zeigt eine Batterie 1, von welcher lediglich fünf Batteriezellen 2 schematisch gezeigt sind. Von den Batteriezellen 2 sind hier nur die Batteriezellengehäuse sichtbar. Innerhalb der Batteriezellengehäuse ist jeweils ein galvanisches Element angeordnet. Die Batteriezellen 2 sind hier über jeweils ein elektrisches Verbindungselement 3 in Form einer Stromschiene elektrisch zu der Batterie 1 verschaltet. Hier sind die Batteriezellen 2 über das elektrische Verbindungselement 3 seriell verschaltet, indem jeweils ein positiver Anschluss 4 einer der Batteriezellen 2 mit einem negativen Anschluss 5 einer benachbarten Batteriezelle 2 elektrisch verbunden ist. Außerdem weist die Batterie 1 eine übergeordnete Steuereinrichtung 6 auf.

Jede der Batteriezellen 1 weist zumindest eine Sensoreinrichtung 7, 8, 9 auf, welche dem Erfassen von physikalischen und/oder chemischen Eigenschaften der Batteriezelle 2 dienen. Dabei ist die Sensoreinrichtung 7 hier als ein Ladezustandssensor zum Erfassen eines Ladezustands der jeweiligen Batteriezelle 2, die Sensoreinrichtung 8 als ein Temperatursensor zum Erfassen einer Temperatur innerhalb des Batteriezellengehäuses der jeweiligen Batteriezelle 2 und die Sensoreinrichtung 9 als ein Drucksensor zum Erfassen eines Druckes innerhalb des Batteriezellengehäuses der jeweiligen Batteriezelle 2 ausgestaltet. Die Sensoreinrichtungen 7, 8, 9 sind hier innerhalb des Batteriezellengehäuses einer jeden Batteriezelle 2 angeordnet.

Darüber hinaus weist jede der Batteriezellen 2 eine Kommunikationseinrichtung 10 in Form einer Funkantenne auf. Die Batteriezellen 2 können über die jeweilige Kommunikationseinrichtung 10 mit der übergeordneten Steuereinrichtung 6 kommunizieren. Die Kommunikation erfolgt hier drahtlos, beispielsweise über WLAN oder Bluetooth oder ähnliches. Es kann aber auch vorgesehen sein, dass jede der Batteriezellen 2 über jeweils eine Leitung 11 mit der übergeordneten Steuereinrichtung 6 kommuniziert. Dazu kann die Leitung 11 beispielsweise mit einem der Anschlüsse 4, 5 der Batteriezellen 2 verbunden sein. Die Leitung 11 kann ein sogenanntes Ethernet-Kabel sein. Somit können Daten über "Power over Ethernet" zwischen der übergeordneten Steuereinrichtung 6 und der jeweiligen Batteriezelle 2 übertragen werden. Die Leitung 11 kann auch eine sogenannte Powerline sein, bei welcher Daten über ein Stromnetz übertragen werden.

Auch weist jede der Batteriezellen 2 hier eine Sicherheitsfunktion 19 beziehungsweise eine Security-Funktion auf, mittels welcher beispielsweise sichergestellt werden kann, dass es sich bei der Batteriezelle 2 um einen von einem sogenannten Erstausrüster (OEM - Original Equipment Manufacturer) bereitgestellten Energiespeicher handelt. Dort können auch individuelle Identifikationsnummern, sogenannte IDs, und weitere Informationen für jede Batteriezelle 2 elektronisch hinterlegt werden.

Auch kann vorgesehen sein, dass jedes der elektrischen Verbindungselemente 3 eine Sensoreinrichtung 18 und eine Kommunikationseinrichtung 12 zur Kommunikation mit der übergeordneten Steuereinrichtung 6 aufweist. Mittels der Kommunikationseinrichtung 12 können Daten der Sensoreinrichtung 18 des elektrischen Verbindungselementes 3 an die übergeordnete Steuereinrichtung 6 übertragen werden. Solche Daten können beispielsweise einen Strom angeben, welcher über das elektrische Verbindungselement 3 zwischen den Anschlüssen 4, 5 zweier Batteriezellen 2 fließt, oder eine Temperatur oder eine mechanische Biegung des elektrischen Verbindungselementes 3.

Die Steuereinrichtung 6 ist nun dazu ausgelegt, die übertragenen Daten, also beispielsweise die Daten der Sensoreinrichtungen 7, 8, 9 und/oder die die elektrischen Verbindungselemente 3 betreffenden Daten, zu empfangen und in Abhängigkeit von diesen Daten einen Energiefluss aus zumindest einer der Batteriezellen 2 und/oder in zumindest eine der Batteriezellen 2 zu steuern. Auch kann vorgesehen sein, dass die übergeordnete Steuereinrichtung 6, beispielsweise über eine Bus-Verbindung 20, mit einem hier nicht gezeigten Batteriemanagementsystem kommuniziert.

Auch kann es vorgesehen sein, dass jede der Batteriezellen 2 eine hier nicht dargestellte Auswerteeinrichtung aufweist, welche dazu ausgelegt ist, die Auswertung der Daten der Sensoreinrichtungen 7, 8, 9 selbst durchzuführen. Auch kann es vorgesehen sein, dass Berechnungen von der übergeordneten Steuereinrichtung 6 durchgeführt werden und nur die Ergebnisse an die Auswerteeinrichtung der jeweiligen Batteriezelle 2 übertragen werden.

Mittels der Auswerteeinrichtung kann beispielsweise eine Impedanzanalyse beziehungsweise eine Impedanzmikroskopie bei jeder der Batteriezellen 2 durchgeführt werden und somit beispielsweise eine Aussage über einen Innenwiderstand jeder der Batteriezellen 2 getroffen werden. So kann beispielsweise der Energiefluss an den Innenwiderstand der jeweiligen Batteriezelle 2 angepasst werden, um somit insbesondere eine Gleichbelastung aller Batteriezellen 2 der Batterie 1 zu gewährleisten. Auch kann eine Ladesäule, also eine Vorrichtung zum Bereitstellen der Ladeenergie, aktiv über den tatsächlichen Zustand, beispielsweise den Gesundheitszustand (SoH), jeder der Batteriezellen 2 informiert werden. So kann das Laden dynamisch an den Zustand der jeweiligen Batteriezelle 2 angepasst werden und beispielsweise bei kritischen Zuständen der Batteriezelle 2 aktiv abgeschaltet werden.

Um den Energiefluss zu steuern, kann jede der Batteriezellen 2 eine Schalteinrichtung 13 aufweisen. Die Schalteinrichtung 13 kann ein elektronisches Schaltelement und/oder ein Relais aufweisen. Über die Schalteinrichtung 13 wird insbesondere ein Stromfluss zwischen dem galvanischen Element in dem Batteriezellengehäuse und den Anschlüssen 4, 5 derselben Batteriezelle 2 gesteuert, indem etwa durch die übergeordnete Steuereinrichtung 6 ein Steuersignal, beispielsweise eine Steuerspannung, bereitgestellt wird. Mittels der Schalteinrichtung 13 kann insbesondere ein Stromfluss zwischen dem galvanischen Element und den Anschlüssen 4, 5 begrenzt oder unterbrochen werden. Die Schalteinrichtung 13 kann also die Funktion einer an sich bekannten Schmelzsicherung erfüllen.

Die übergeordnete Steuereinrichtung 6 ist bevorzugt dazu ausgelegt, als den Energiefluss einen Stromfluss zwischen dem galvanischen Element und den Anschlüssen 4, 5 zumindest einer der Batteriezellen 2 mittels der Schalteinrichtung 13 zu steuern. Der Stromfluss kann beispielsweise von der durch die übergeordnete Steuereinrichtung 6 angesteuerten Schalteinrichtung 13 dann unterbrochen beziehungsweise gesperrt werden, wenn eine Strombelastung dieser Batteriezelle 2 gefährlich erscheint. Dies kann zum Beispiel dann vorkommen, wenn von der Sensoreinrichtung 9 erfasst wurde, dass der Druck in dem Batteriezellengehäuse einen vorgegebenen Schwellwert für einen Druck überschreitet und dieser erhöhte Druckwert, beispielsweise über die Kommunikationseinrichtung 10 der Batteriezelle 2, an die übergeordnete Steuereinrichtung 6 kommuniziert wurde. Daraufhin kann die übergeordnete Steuereinrichtung 6 die Schalteinrichtung 13 zum Sperren des Stromflusses ansteuern. Auch kann der Stromfluss einer Batteriezelle 2 begrenzt werden, wenn die Batteriezelle 2 beispielsweise einen Gesundheitszustands (SoH) aufweist, welcher auf eine Alterung oder eine Schädigung der Batteriezelle 2 hinweist.

Die Schalteinrichtung 13 kann auch von der Auswerteeinrichtung der jeweiligen Batteriezelle 2 geschaltet werden, insbesondere abhängig von den Daten der Sensoreinrichtungen 7, 8, 9 der jeweiligen Batteriezelle 2.

Bei der Batterie 1 können auch mehrere Batteriezellen 2 zu einem Batteriemodul parallel geschaltet sein und mehrere Batteriemodule zusammengeschaltet sein. Bei einer Ausführung der Schalteinrichtung 13 als Leistungshalbleiterelement kann zudem sichergestellt werden, dass bei dieser Ausführungsform der Batterie 1 ein resultierender Gesamtwiderstand, welcher abhängig von der jeweiligen Länge und der Anknüpfung der Stromschiene an den jeweiligen Anschluss 4, 5 sowie dem Übergang zwischen den Batteriemodulen ist, kompensiert werden kann. Mit anderen Worten bedeutet dies, dass ein Innenwiderstand jeder der Batteriezellen 2 mittels der Schalteinrichtung 13 dynamisch angepasst werden kann. Somit werden die Batteriezellen aufgrund der Gesamtwiderstandskompensation gleich belastet und altern dadurch langfristig gleichmäßig.

Auch kann ein Energiefluss zwischen den Batteriezellen 2 zum Ladezustandsausgleich der Batteriezellen 2 gesteuert werden. Wenn beispielsweise von der Sensoreinrichtung 7 einer der Batteriezellen 2 ein erster Ladezustand erfasst wurde und von der Sensoreinrichtung 7 einer anderen der Batteriezellen 2 ein zweiter, gegenüber dem ersten Ladezustand größerer Ladezustand erfasst wurde, so kann die übergeordnete Steuereinrichtung 6 eine Abweichung zwischen dem ersten und dem zweiten Ladezustand feststellen. Wenn diese Abweichung einen vorgegebenen Schwellwert der Abweichung überschreitet, so kann die übergeordnete Steuereinrichtung 6 ein Balancing beziehungsweise einen Ladezustandsausgleich durchführen. Dazu kann die Batteriezelle 2 mit dem zweiten Ladezustand beispielsweise über ein hier nicht dargestelltes Widerstandselement der Batteriezelle entladen werden. Dazu kann die übergeordnete Steuereinrichtung 6 das Widerstandselement, beispielsweise mittels eines Schaltelementes, solange an die Elektroden des galvanischen Elementes der Batteriezelle 2 mit dem zweiten Ladezustand anschließen, bis der zweite Ladezustand dem ersten Ladezustand angeglichen ist. Dies wird als passives beziehungsweise dissipatives Balancing bezeichnet.

Auch kann die übergeordnete Steuereinrichtung 6 ein aktives Balancing durchführen, indem sie einen Energiefluss von der Batteriezelle 2 mit dem zweiten Ladezustand zu der Batteriezelle 2 mit dem ersten Ladezustand steuert. Hier wird elektrische Energie von der Batteriezelle 2 mit dem zweiten Ladezustand kapazitiv an die Batteriezelle 2 mit dem ersten Ladezustand übertragen. Dazu weisen Seitenwände 14 der Batteriezellengehäuse der Batteriezellen 2 ein elektrisch leitfähiges Material 15 auf. Es kann auch vorgesehen sein, dass die Batteriezellengehäuse bereits aus dem elektrisch leitfähigen Material 15, beispielsweise Aluminium, gefertigt sind. Somit wird mittels zweier einander zugewandten Seitenwände 14 zweier verschiedener Batteriezellen 2 ein Plattenkondensator ausgebildet. Dabei bilden die Seitenwände 14 die Elektroden des Plattenkondensators und ein zwischen den Seitenwänden 14 angeordnetes Isoliermaterial 16 das Dielektrikum des Plattenkondensators. Mittels dieses Plattenkondensators kann eine kapazitive Energieübertragung 17 zwischen zwei benachbarten Batteriezellen 2 stattfinden. Dabei wird kapazitiv Energie von der Batteriezelle 2 mit dem zweiten Ladezustand über deren Seitenwand 14 an die Batteriezelle 2 mit dem ersten Ladazustand über deren Seitenwand 14 übertragen. Die kapazitive Energieübertragung 17 kann auch über mehrere Batteriezellen 2 hinweg stattfinden. Bei der Energieübergabe von Batteriezelle 2 zu benachbarter Batteriezelle 2 ist es dabei nicht erforderlich, die zu verteilende Energiemenge in der jeweiligen Batteriezelle 2 zuerst einzulagern und sie wieder zu entnehmen und dadurch möglicherweise die Batteriezelle 2 außerhalb der von der Batteriezellchemie gesetzten Grenzen zu betreiben. Durch die verkettete Plattenkondensatoranordnung besteht die Möglichkeit, die zu verteilende Energiemenge, direkt, also ohne Einlagerung in einer Batteriezelle 2, an die nächste Batteriezelle 2 dynamisch und zielgerichtet weiterzugeben.

## Patentansprüche

1. Batterie (1) mit zumindest zwei Batteriezellen (2), welche mittels zumindest eines elektrischen Verbindungselementes (3) miteinander verschaltet sind, und einer übergeordneten Steuereinrichtung (6), wobei jede der Batteriezellen (2) zumindest ein galvanisches Element, ein Batteriezellengehäuse zum Aufnehmen des galvanischen Elementes, zumindest eine Sensoreinrichtung (7, 8, 9) zum Erfassen einer physikalischen und/oder chemischen Eigenschaft der Batteriezelle (2) und eine Kommunikationseinrichtung (10, 11) zum Kommunizieren mit der übergeordneten Steuereinrichtung (6) aufweist,
wobei
die übergeordnete Steuereinrichtung (6) dazu ausgelegt ist, in Abhängigkeit von den physikalischen und/oder chemischen Eigenschaften der Batteriezellen (2) einen Energiefluss in zumindest eine der Batteriezellen (2) und/oder aus zumindest einer der Batteriezellen (2) zu steuern, wobei das elektrische Verbindungselement (3) zumindest eine Sensoreinrichtung zum Erfassen einer Zustandsgröße des elektrischen Verbindungselementes (3) und eine Kommunikationseinrichtung (12) zum Kommunizieren mit der übergeordneten Steuereinrichtung (6) aufweist, und die übergeordnete Steuereinrichtung (6) dazu ausgelegt ist, den Energiefluss in Abhängigkeit von der erfassten Zustandsgröße zu steuern und die zumindest eine Sensoreinrichtung (7, 8, 9) jeder der Batteriezellen (2) dazu ausgelegt ist, einen Ladezustand der jeweiligen Batteriezelle (2) zu erfassen, wobei die übergeordnete Steuereinrichtung (6) dazu ausgelegt ist, die Ladezustände der Batteriezellen (2) miteinander zu vergleichen und bei Überschreitung einer vorgegebenen Abweichung der Ladezustände den Energiefluss zum Angleichen der Ladezustände zu steuern und die zumindest zwei Batteriezellen (2) mittels des elektrischen Verbindungselementes (3) seriell verschaltet sind und zumindest eine Seitenwand (14) eines ersten der Batteriezellengehäuse und zumindest eine Seitenwand (14) eines zweiten der Batteriezellengehäuse ein elektrisch leitfähiges Material (15) aufweisen und die übergeordnete Steuereinrichtung (6) dazu ausgelegt ist, bei der Überschreitung der vorgegebenen Abweichung eine kapazitive Energieübertragung (17) zwischen den Seitenwänden (14) der Batteriezellengehäuse zum Angleichen der Ladezustände zu steuern.

2. Batterie (1) nach Anspruch 1,
**dadurch gekennzeichnet, dass**
jede der Batteriezellen (2) eine Speichereinrichtung zum Speichern der physikalischen und/oder chemischen Eigenschaft der Batteriezelle aufweist und die übergeordnete Steuereinrichtung dazu ausgelegt ist, in Abhängigkeit von den gespeicherten physikalischen und/oder chemischen Eigenschaften der Batteriezellen den Energiefluss zu steuern.

3. Batterie (1) nach einem der Ansprüche 1 bis 2,
**dadurch gekennzeichnet, dass**
jede der Batteriezellen (2) zumindest eine Schalteinrichtung (13) aufweist, mittels welcher eine Elektrode des galvanischen Elementes und ein Anschluss (4, 5) der jeweiligen Batteriezelle (2) elektrisch gekoppelt sind und mittels welcher ein Stromfluss zwischen dem galvanischen Element und dem Anschluss (4, 5) der jeweiligen Batteriezelle (2) steuerbar ist, und die übergeordnete Steuereinrichtung (6) dazu ausgelegt ist, als den Energiefluss den Stromfluss zwischen der Elektrode und dem Anschluss (4, 5) zumindest einer der Batteriezellen (2) zu steuern.

4. Batterie (1) nach Anspruch 3,
**dadurch gekennzeichnet, dass**
die zumindest eine Sensoreinrichtung (7, 8, 9) jeder der Batteriezellen (2) als ein Temperatursensor (8) zum Erfassen einer Temperatur und/oder als ein Drucksensor (7) zum Erfassen eines Druckes der jeweiligen Batteriezelle (2) ausgestaltet ist und die übergeordnete Steuereinrichtung (6) dazu ausgelegt ist, den Stromfluss zwischen der Elektrode und dem Anschluss (4, 5) der jeweiligen Batteriezelle (2) in Abhängigkeit von der Temperatur und/oder von dem Druck der jeweiligen Batteriezelle (2) zu steuern.

5. Batterie (1) nach Anspruch 3 oder 4,
**dadurch gekennzeichnet, dass**
jede der Batteriezellen (2) jeweils eine Auswerteeinrichtung aufweist, welche dazu ausgelegt ist, in Abhängigkeit von der erfassten physikalischen und/oder chemischen Eigenschaft einen Schädigungsgrad der jeweiligen Batteriezelle (2) zu ermitteln, wobei die übergeordnete Steuereinrichtung (6) und/oder die Auswerteeinrichtung dazu ausgelegt ist, den Stromfluss zwischen der Elektrode und dem Anschluss (4, 5) der jeweiligen Batteriezelle (2) in Abhängigkeit von dem Schädigungsgrad der jeweiligen Batteriezelle (2) zu steuern.

6. Batterie (1) nach Anspruch einem der vorhergehenden Ansprüche,
**dadurch gekennzeichnet, dass**
jede der Batteriezellen (2) ein insbesondere thermisch mit dem jeweiligen Batteriezellengehäuse gekoppeltes Widerstandselement aufweist und die übergeordnete Steuereinrichtung (6) dazu ausgelegt ist, bei der Überschreitung der vorgegebenen Abweichung das Widerstandselement zumindest einer der Batteriezellen (2) zum Angleichen der Ladezustände mit den Elektroden des galvanischen Elementes der jeweiligen Batteriezelle (2) elektrisch zu verbinden.

7. Kraftfahrzeug mit zumindest einer Batterie (1) nach einem der Ansprüche 1 bis 6.

## Claims

1. Battery (1) with at least two battery cells (2), which are connected to one another by means of at least one electric connecting element (3), and a superordinate control device (6), wherein each of the battery cells (2) has at least one galvanic element, a battery cell housing for accommodating the galvanic element, at least one sensor device (7, 8, 9) for detecting a physical and/or chemical property of the battery cell (2) and a communication device (10, 11) for communicating with the superordinate control device (6),
wherein
the superordinate control device (6) is configured as a function of the physical and/or chemical properties of the battery cells (2) to control an energy flow into at least one of the battery cells (2) and/or from at least one of the battery cells (2),
wherein
the electric connecting element (3) has at least one sensor device for detecting a state variable of the electric connecting element (3) and a communication device (12) for communicating with the superordinate control device (6), and the superordinate control device (6) is configured to control the energy flow as a function of the detected state variable, and the at least one sensor device (7, 8, 9) of each of the battery cells (2) is configured to detect a charging state of the respective battery cell (2), wherein the superordinate control device (6) is configured to compare the charging states of the battery cells (2) with one another and if a prespecified deviation of the charging states is exceeded to control the energy flow for adjusting the charging states and the at least two battery cells (2) are connected in series by means of the electric connecting element (3) and at least one side wall (14) of a first of the battery cell housings and at least one side wall (14) of a second of the battery cell housings comprise an electroconductive material (15), and the superordinate control device (6) is configured, when the specified deviation is exceeded, to control a capacitive transfer of energy (17) between the side walls (14) of the battery cell housings for adjusting the charging states.

2. Battery (1) according to claim 1, **characterised in that** each of the battery cells (2) is provided with a storage device for storing the physical and/or chemical property of the battery cell and the superordinate control device is configured to control the energy flow as a function of the stored physical and/or chemical properties of the battery cells.

3. Battery (1) according to any of claims 1 to 2, **characterised in that** each of the battery cells (2) has at least one switching device (13), by means of which an electrode of the galvanic element and a connection (4, 5) of the respective battery cell (2) are electrically coupled and by means of which a current flow between the galvanic element and the connection (4, 5) of the respective battery cell (2) can be controlled and the superordinate control device (6) is configured to control the current flow as the energy flow between the electrode and the connection (4, 5) of at least one of the battery cells (2).

4. Battery (1) according to claim 3, **characterised in that** the at least one sensor device (7, 8, 9) of each of the battery cells (2) is configured as a temperature sensor (8) for detecting a temperature and/or as a pressure sensor (7) for detecting a pressure of the respective battery cell (2) and the superordinate control device (6) is configured to control the current flow between the electrode and the connection (4, 5) of the respective battery cell (2) as a function of the temperature and/or the pressure of the respective battery cell (2).

5. Battery (1) according to claim 3 or 4, **characterised in that** each of the battery cells (2) is provided respectively with an evaluation device which is configured to determine as a function of the detected physical and/or chemical property a degree of damage of the respective battery cell (2), wherein the superordinate control device (6) and/or the evaluation device is configured to control the flow of current between the electrode and the connection (4, 5) of the respective battery cell (2) as a function of the degree of damage of the respective battery cell (2).

6. Battery (1) according to claim any of the preceding claims, **characterised in that** each of the battery cells (2) has a resistance element coupled in particular thermally to the respective battery cell housing and the superordinate control device (6) is configured, when the defined deviation is exceeded to electrically connect the resistance element of at least one of the battery cells (2) for adjusting the charging states with the electrodes of the galvanic element of the respective battery cell (2).

7. Motor vehicle with at least one battery (1) according to any of claims 1 to 6.

## Revendications

1. Batterie (1) avec au moins deux éléments de batterie (2), lesquels sont connectés l'un à l'autre au moyen d'au moins un élément de liaison électrique (3), et un dispositif de commande supérieur (6), dans laquelle chacun des éléments de batterie (2) présente au moins un élément galvanique, un boîtier d'élément de batterie destiné à recevoir l'élément galvanique, au moins un dispositif de détection (7, 8, 9) destiné à détecter une propriété physique et/ou chimique de l'élément de batterie (2) et un dispositif de communication (10, 11) destiné à communiquer avec le dispositif de commande supérieur (6),
dans laquelle
le dispositif de commande supérieur (6) est configuré pour commander un flux d'énergie dans au moins un des éléments de batterie (2) et/ou à partir d'au moins un des éléments de batterie (2) en fonction des propriétés physiques et/ou chimiques des éléments de batterie (2),
dans laquelle l'élément de liaison électrique (3) présente au moins un dispositif de détection destiné à détecter une grandeur d'état de l'élément de liaison électrique (3) et un dispositif de communication (12) destiné à communiquer avec le dispositif de commande supérieur (6), et le dispositif de commande supérieur (6) est configuré pour commander le flux d'énergie en fonction de la grandeur d'état détectée et l'au moins un dispositif de détection (7, 8, 9) de chacun des éléments de batterie (2) est configuré pour détecter un état de charge de l'élément de batterie (2) respectif, dans laquelle le dispositif de commande supérieur (6) est configuré pour comparer les états de charge des éléments de batterie (2) les uns aux autres et, lors d'un dépassement d'un écart prédéfini des états de charge, commander le flux d'énergie pour ajuster les états de charge et les au moins deux éléments de batterie (2) sont connectés en série au moyen de l'élément de liaison électrique (3) et au moins une paroi latérale (14) d'un premier des boîtiers d'élément de batterie et au moins une paroi latérale (14) d'un second des boîtiers d'élément de batterie présentent un matériau électro-conducteur (15) et le dispositif de commande supérieur (6) est configuré pour commander une transmission d'énergie capacitive (17) entre les parois latérales (14) du boîtier d'élément de batterie pour ajuster les états de charge lors du dépassement de l'écart prédéfini.

2. Batterie (1) selon la revendication 1,
**caractérisée en ce que**
chacun des éléments de batterie (2) présente un dispositif de mémoire destiné à mettre en mémoire la propriété physique et/ou chimique de l'élément de batterie et le dispositif de commande supérieur est configuré pour commander le flux d'énergie en fonction des propriétés physiques et/ou chimiques mises en mémoire des éléments de batterie.

3. Batterie (1) selon l'une quelconque des revendications 1 à 2,
**caractérisée en ce que**
chacun des éléments de batterie (2) présente au moins un dispositif de commutation (13), au moyen duquel une électrode de l'élément galvanique et un raccordement (4, 5) de l'élément de batterie (2) respectif sont couplés électriquement et au moyen duquel un flux de courant entre l'élément galvanique et le raccordement (4, 5) de l'élément de batterie (2) respectif peut être commandé, et le dispositif de commande supérieur (6) est configuré pour commander, en tant que flux d'énergie, le flux de courant entre l'électrode et le raccordement (4, 5) d'au moins un des éléments de batterie (2).

4. Batterie (1) selon la revendication 3,
**caractérisée en ce que**
l'au moins un dispositif de détection (7, 8, 9) de chacun des éléments de batterie (2) est configuré en tant que capteur de température (8) pour détecter une température et/ou en tant que capteur de pression (7) pour détecter une pression de l'élément de batterie (2) respectif et le dispositif de commande supérieur (6) est configuré pour commander le flux de courant entre l'électrode et le raccordement (4, 5) de l'élément de batterie (2) respectif en fonction de la température et/ou de la pression de l'élément de batterie (2) respectif.

5. Batterie (1) selon la revendication 3 ou 4,
**caractérisée en ce que**
chacun des éléments de batterie (2) présente respectivement un dispositif d'évaluation, lequel est configuré pour déterminer en fonction de la propriété physique et/ou chimique détectée un degré d'endommagement de l'élément de batterie (2) respectif, dans laquelle le dispositif de commande supérieur (6) et/ou le dispositif d'évaluation est configuré pour commander le flux de courant entre l'électrode et le raccordement (4, 5) de l'élément de batterie (2) respectif en fonction du degré d'endommagement de l'élément de batterie (2) respectif.

6. Batterie (1) selon la revendication une des revendications précédentes,
**caractérisée en ce que**
chacun des éléments de batterie (2) présente un élément de résistance couplé en particulier de manière thermique au boîtier d'élément de batterie respectif et le dispositif de commande supérieur (6) est configuré pour relier électriquement l'élément de résistance d'au moins un des éléments de batterie (2) aux électrodes de l'élément galvanique de l'élément de batterie (2) concerné pour ajuster les états de charge lors du dépassement de l'écart prédéfini.

7. Véhicule à moteur avec au moins une batterie (1) selon l'une quelconque des revendications 1 à 6.
